# EUROPEAN PATENT APPLICATION

(11) **EP 4 071 550 A1**
(43) Date of publication of application: **12.10.2022**
(21) Application number: 20907633.0
(22) Date of filing: 18.12.2020
(51) Int. Cl.: G03B 21/14, F21S 2/00, F21V 5/00, F21V 5/04, F21V 7/28, F21V 7/30, F21V 9/14, F21V 9/20, G02B 5/20, G02B 5/30, G03B 21/00, H04N 9/31, F21Y 113/13, F21Y 115/10, F21Y 115/30

(54) **LIGHT SOURCE DEVICE AND PROJECTION-TYPE DISPLAY DEVICE**

(30) Priority: 27.12.2019 JP 2019239311
(71) Applicant: Sony Group Corporation, Tokyo 108-0075 (JP)
(72) Inventor: ISHIGE, Masahiro, Tokyo 108-0075 (JP); TAJIRI, Shinichiro, Tokyo 108-0075 (JP)
(74) Representative: D Young & Co LLP
(86) International application number: PCT/JP2020/047368
(87) International publication number: WO 2021/132061

(57) **Abstract**

A light source device according to an embodiment of the present disclosure includes: a first light source section that emits light in a first wavelength region; a wavelength conversion section that is disposed on an optical path of the light in the first wavelength region, and is excited by the light in the first wavelength region emitted from the first light source section to emit light in a second wavelength region different from the first wavelength region; a first polarization separation element that separates the light in the second wavelength region emitted from the wavelength conversion section on the basis of polarization; and a second polarization separation element that is disposed together with the first polarization separation element between the first light source section and the wavelength conversion section, and has wavelength selectivity.

## Description

### Technical Field

The present disclosure relates to, for example, a light source device to be used for illumination of a projection-type display apparatus, and a projection-type display apparatus including the light source device.

### Background Art

In recent years, in a projector (projection-type display apparatus), a light source device (illumination device) is used which irradiates a phosphor with light from a solid-state light source such as a laser and outputs light resulting from fluorescent emission as illumination light. In addition, the phosphor is formed on a reflective material such as a metal to have a so-called reflective configuration, thereby making it possible to obtain a high output.

For example, PTL 1 discloses a compact light source device with high color purity and wide color gamut which is obtained by condensing and synthesizing fluorescence light and beams of light from a blue solid-state light source and a red solid-state light source in the same optical system.

### Citation List

### Patent Literature

PTL 1: Japanese Unexamined Patent Application Publication No. 2019-028442

### Summary of the Invention

Incidentally, a light source device including a wavelength conversion element using a phosphor as a light source is required to improve light extraction efficiency.

It is therefore desirable to provide a light source device and a projection-type display apparatus that make it possible to improve efficiency in extraction of light with uniform polarization.

A light source device according to an embodiment of the present disclosure includes: a first light source section that emits light in a first wavelength region; a wavelength conversion section that is disposed on an optical path of the light in the first wavelength region, and is excited by the light in the first wavelength region emitted from the first light source section to emit light in a second wavelength region different from the first wavelength region; a first polarization separation element that separates the light in the second wavelength region emitted from the wavelength conversion section on the basis of polarization; and a second polarization separation element that is disposed together with the first polarization separation element between the first light source section and the wavelength conversion section, and has wavelength selectivity.

A projection-type display apparatus according to an embodiment of the present disclosure includes a light source device, a light modulation element that modulates light emitted from the light source device, and a projection optical system that projects light from the light modulation element. The light source device mounted in the projection-type display apparatus has the same components as those of the light source device of an embodiment of the above-described present disclosure.

According to the light source device of an embodiment of the present disclosure and the projection-type display apparatus of an embodiment of the present disclosure, a first polarization separation element that separates light in the second wavelength region emitted from the wavelength conversion section on the basis of polarization and a second polarization separation element having wavelength selectivity are provided between the first light source section and the wavelength conversion section. This makes it possible to improve utilization efficiency of fluorescence (light in the second wavelength region) emitted from the wavelength conversion section.

### Brief Description of the Drawings

[FIG. 1] FIG. 1 is a schematic view of a configuration example of a light source device according to a first embodiment of the present disclosure.
[FIG. 2A] FIG. 2A is a schematic plan view of another configuration example of a wavelength conversion section illustrated in FIG. 1.
[FIG. 2B] FIG. 2B is a schematic view of a cross-sectional configuration of the wavelength conversion section illustrated in FIG. 2A.
[FIG. 3] FIG. 3 is a schematic view of a configuration example of a light source device according to a second embodiment of the present disclosure.
[FIG. 4] FIG. 4 is a schematic view of a configuration example of a light source device according to Modification Example 1 of the present disclosure.
[FIG. 5] FIG. 5 is a schematic view of a configuration example of a light source device according to Modification Example 2 of the present disclosure.
[FIG. 6] FIG. 6 is a schematic view of a configuration example of a light source device according to Modification Example 3 of the present disclosure.
[FIG. 7] FIG. 7 is a schematic view of a configuration example of a light source device according to a third embodiment of the present disclosure.
[FIG. 8] FIG. 8 is a schematic view of a configuration example of a light source device according to a fourth embodiment of the present disclosure.
[FIG. 9] FIG. 9 is a functional block diagram illustrating an overall configuration of a projection-type display apparatus of the present disclosure.
[FIG. 10] FIG. 10 is a schematic view of an example of a configuration of an optical system of the projection-type display apparatus illustrated in FIG. 9.
[FIG. 11] FIG. 11 is a schematic view of another example of the configuration of the optical system of the projection-type display apparatus illustrated in FIG. 9.
[FIG. 12] FIG. 12 is a schematic view of an example of a configuration of a display system.
[FIG. 13] FIG. 13 is a functional block diagram of the display system illustrated in FIG. 12.
[FIG. 14] FIG. 14 is a schematic view of another example of the configuration of the display system.

### Modes for Carrying Out the Invention

Hereinafter, description is given in detail of embodiments of the present disclosure with reference to the drawings. The following description is merely a specific example of the present disclosure, and the present disclosure should not be limited to the following aspects. Moreover, the present disclosure is not limited to arrangements, dimensions, dimensional ratios, and the like of each component illustrated in the drawings. It is to be noted that the description is given in the following order.
1. First embodiment (Example of a light source device in which a polarization separation element is disposed between an excitation light light source section and a wavelength conversion section and a polarization separation element having wavelength selectivity is disposed substantially perpendicular to a polarization separation surface of the polarization separation element)
   1-1. Configuration of Light Source Device
   1-2. Operating Principle of Light Source Device
   1-3. Workings and Effects
2. Second Embodiment (Example of a light source device in which two polarization separation elements are configured by prisms)
3. Modification Examples
   3-1. Modification Example 1 (Example in which prisms are spaced apart from each other)
   3-2. Modification Example 2 (Example in which prisms are integrated with an adhesive layer interposed thereamong)
   3-3. Modification Example 3 (Another example in which two polarization separation elements are configured by prisms)
4. Third Embodiment (Example in which a polarization conversion element is further disposed between a wavelength conversion section and a polarization separation element)
5. Fourth Embodiment (Example in which an excitation light source is further disposed on a back surface of a wavelength conversion section)
6. Application Examples

### <1. First Embodiment>

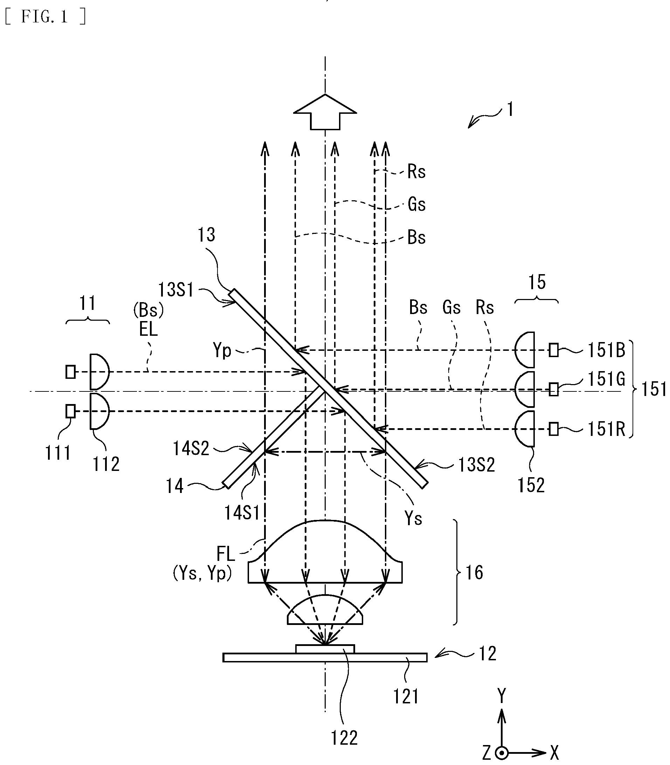

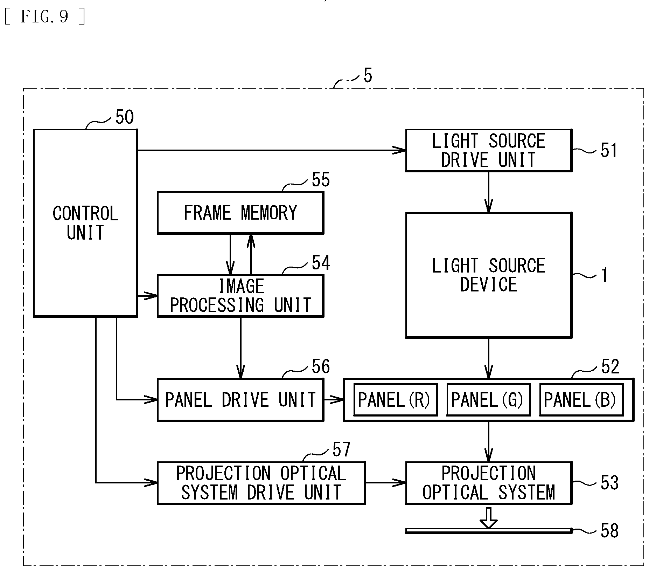

FIG. 1 illustrates a configuration example of a light source device (a light source device 1) according to a first embodiment of the present disclosure. The light source device 1 is used, for example, for illumination of a projection-type display apparatus (a projection-type display apparatus 5; see FIG. 9) described later.

### (1-1. Configuration of Light Source Device)

The light source device 1 includes, for example, a light source section 11, a wavelength conversion section 12, and two polarization separation elements 13 and 14. The two polarization separation elements 13 and 14 are disposed between the light source section 11 and the wavelength conversion section 12 on an optical path of excitation light EL emitted from the light source section 11. In the present embodiment, one (polarization separation element 14) of the two polarization separation elements 13 and 14 has wavelength selectivity. The light source device 1 further includes a light source section 15 and a light-condensing optical system 16. The light source section 15 is disposed to be opposed to the light source section 11, for example, with the polarization separation elements 13 and 14 interposed therebetween, and the light-condensing optical system 16 is disposed between the wavelength conversion section 12 and the polarization separation element 14.

The light source section 11 includes one or multiple light sources 111 and lenses 112 disposed to be opposed to the respective light sources 111. The light source 111 is a solid-state light source that emits light in a predetermined wavelength region, and is provided to excite phosphor particles included in a phosphor layer 122 of the wavelength conversion section 12 described later. It may be possible to use, as the light source 111, a semiconductor laser (Laser Diode: LD), for example. Aside therefrom, a light-emitting diode (Light Emitting Diode: LED) may be used.

The light source section 11 emits, as the excitation light EL, light (blue light) in a wavelength band corresponding to a blue color having a wavelength of 400 nm to 470 nm, for example, or light (ultraviolet: UV light) in an ultraviolet region having a wavelength of 350 nm to 400 nm, for example. In a case of using an ultraviolet laser emitting UV light as the light source 111, it is possible to improve luminous efficiency and conversion efficiency as compared with a case of using a blue laser. This makes it possible to improve the percentage of power of fluorescence FL finally available to electric power to be supplied to the light source section 11. This light source section 11 corresponds to a specific example of a "first light source section" of the present disclosure, and blue light or UV light corresponds to a specific example of "light in a first wavelength region" of the present disclosure. It is to be noted that, as used herein, the light in a predetermined wavelength region refers to light having a luminous intensity peak in that wavelength region.

The wavelength conversion section 12 converts light (excitation light EL) emitted from the light source section 11 into light (fluorescence FL) in a different wavelength region and emits the light; the wavelength conversion section 12 corresponds to a specific example of a "wavelength conversion section" of the present disclosure. The wavelength conversion section 12 is of a so-called reflective type, for example, in which the phosphor layer 122 is provided on a support substrate 121 having light reflectivity, and is configured to reflect and emit the fluorescence FL generated by incidence of the excitation light EL.

The support substrate 121 is provided to support the phosphor layer 122, and has a disk shape, for example. The support substrate 121 preferably has functions not only as a reflective member but also as a heat dissipation member. Therefore, the support substrate 121 is preferably formed by a metal material having high thermal conductivity. In addition, it is preferable to use a metal material or a ceramic material enabling specular working. This suppresses temperature rise in the phosphor layer 122, thus making it possible to improve efficiency in extraction of light (fluorescence FL) in the wavelength conversion section 12.

Examples of such a metal material include a simple metal such as aluminum (Al), copper (Cu), molybdenum (Mo), tungsten (W), cobalt (Co), chromium (Cr), platinum (Pt), tantalum (Ta), lithium (Li), zirconium (Zr), ruthenium (Ru), rhodium (Rh), or palladium (Pd), or an alloy including one or more of these metals. Examples of the ceramic material include silicon carbide (SiC), aluminum nitride (AlN), beryllium oxide (BeO), a composite material of Si and SiC, or a composite material of SiC and Al (provided that SiC content is 50% or more).

The phosphor layer 122 includes multiple phosphor particles, and is excited by the excitation light EL to emit light (fluorescence FL) in a wavelength region different from a wavelength region of the excitation light EL. The phosphor layer 122 is formed in a plate-like shape, for example, and is configured by a so-called ceramic phosphor or a binder phosphor, for example. The phosphor layer 122 includes, for example, phosphor particles that each emit light (fluorescence FL) in a wavelength region corresponding to a yellow color by being excited by, for example, blue light (excitation light EL) emitted from the light source section 11. This yellow light corresponds to a specific example of "light in a second wavelength region" of the present disclosure. Examples of such phosphor particles include a YAG (Yttrium-Aluminum-Garnet)-based material. The phosphor layer 122 may further include semiconductor nanoparticles such as quantum dots, organic pigments, or the like.

It is to be noted that the wavelength conversion section 12 may be mounted with an unillustrated cooling mechanism.

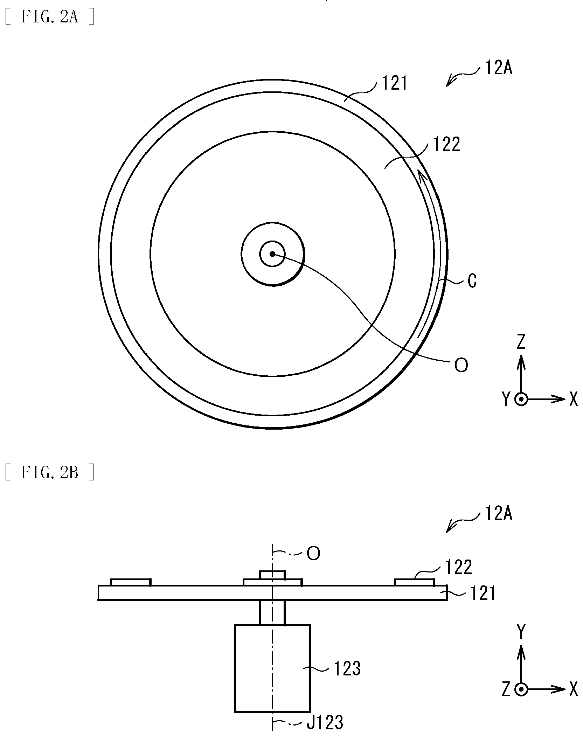

In addition, it may be possible to use, as the wavelength conversion section 12, a so-called phosphor wheel 12A that is rotatable about a rotational axis (e.g., an axis J123) as illustrated in FIGs. 2A and 2B. In the phosphor wheel 12A, a motor 123 (drive part) is coupled to a center (O) of the support substrate 121, and the support substrate 121 is rotatable about the axis J123, for example, in an arrow direction C by driving force of the motor 123. In the phosphor wheel 12A, the phosphor layer 122 is continuously formed, for example, in a rotational circumferential direction of the support substrate 121, for example. In the phosphor wheel 12A, rotation of the support substrate 121 causes an irradiation position of the excitation light EL with respect to the phosphor layer 122 to be temporally changed (moved) at a speed corresponding to the number of rotations. This makes it possible to avoid a decrease in the conversion efficiency and degradation in phosphor particles caused by long-term irradiation of the excitation light EL to the same position of the phosphor layer 122.

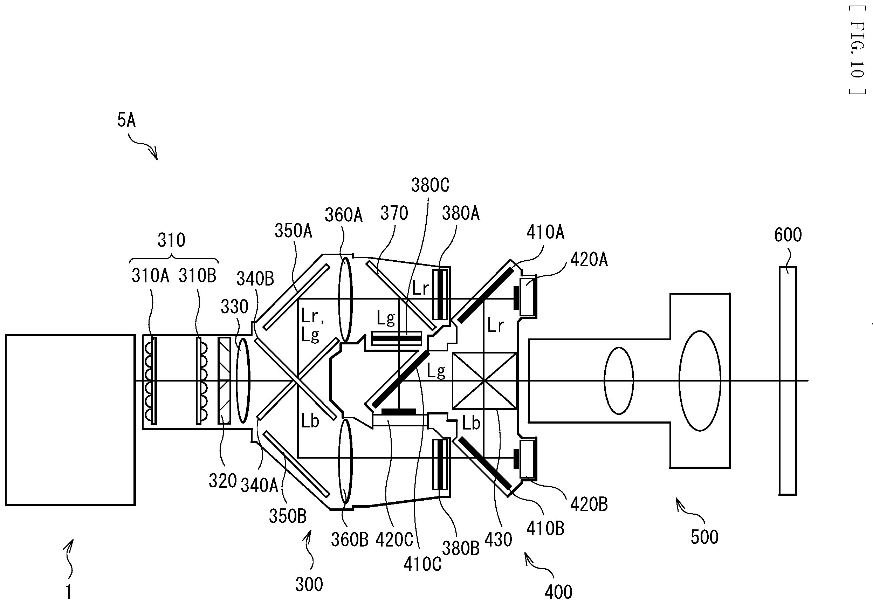

The polarization separation element 13 includes, for example, a polarization beam splitter (PBS). The polarization separation element 13 separates incident light on the basis of a polarized component, and is configured to reflect S-polarized component and transmit a P-polarized component, for example. Specifically, the polarization separation element 13 is disposed between the light source section 11 and the wavelength conversion section 12. The polarization separation element 13 reflects the excitation light EL incident from the light source section 11 to guide the reflected excitation light EL to the wavelength conversion section 12, and reflects a portion of the fluorescence FL incident from the wavelength conversion section 12 to guide the portion thereof to the polarization separation element 14 described later and to guide a rest of the fluorescence FL to an illumination optical system (e.g., an illumination optical system 300; see FIG. 10) described later. In addition, assist light emitted from the light source section 15 described later is incident on the polarization separation element 13. The assist light is reflected by the polarization separation element 13, and is guided to the illumination optical system 300 together with the rest of the fluorescence FL transmitted through the polarization separation element 13. That is, the polarization separation element 13 also functions as a color-synthesizing element (optical path synthesizing element).

The polarization separation element 13 may be configured by a so-called plate-type polarization beam splitter in which an optical functional film reflecting or transmitting incident light for each polarized component is formed, for example, by vapor deposition on one surface of a glass plate having a pair of surfaces opposed to each other, for example. In the present embodiment, for example, the optical functional film (PBS film) is formed on a surface 13S1 of the pair of surfaces (a surface 13S1 and a surface 13S2) opposed to each other. That is, the surface 13S1 corresponds to a specific example of a "first polarization separation surface" of the present disclosure.

The polarization separation element 14 includes, for example, a dichroic PBS, and has wavelength selectivity as described above to act only on light in a predetermined wavelength region. The polarization separation element 14 may be configured by a so-called plate-type dichroic PBS in which an optical functional film configured to separate light in a predetermined wavelength region on the basis of a polarized component and to transmit all beams of light in other wavelength regions is formed, for example, by vapor deposition. In the present embodiment, for example, this optical functional film (dichroic PBS film) is formed on the surface 14S1 of the pair of surfaces (surface 14S1 and surface 14S2) opposed to each other. That is, the surface 14S1 corresponds to a specific example of a "second polarization separation surface" of the present disclosure.

The polarization separation element 14 is disposed together with the polarization separation element 13 between the light source section 11 and the wavelength conversion section 12. Specifically, although description is given in detail later, for example, the polarization separation element 14 is disposed with respect to the polarization separation element 13, to allow the surface 13S1 of the polarization separation element 13 and the surface 14S1 of the polarization separation element 14 to form substantially a right angle to each other. In the polarization separation element 13, the surface 13S1 and the surface 13S2 are disposed to be opposed to each other at an angle of substantially 45° relative to an optical axis direction of the excitation light EL emitted from the light source section 11. This allows a portion of the fluorescence FL reflected by the polarization separation element 13, of the fluorescence FL emitted from the wavelength conversion section 12, to be reflected again by the polarization separation element 14 and to return to the wavelength conversion section 12.

It is to be noted that the polarization separation element 13 and the polarization separation element 14 may be joined to each other, or may be individually held by a holder or the like.

The light source section 15 includes one or multiple light sources 151 and lenses 152 disposed to be opposed to the respective light sources 151. The light source 151 is an auxiliary light source to adjust RGB balance in order to display a wider color gamut in the projection-type display apparatus 5, and is disposed to be opposed to the light source section 11 with, for example, the polarization separation elements 13 and 14 interposed therebetween. It may be possible to use, as the light source 151, for example, a semiconductor laser (LD) similarly to the light source section 11 described above. The use of the semiconductor laser enables etendue to be reduced. Alternatively, a light-emitting diode (LED) may be used. In a case of using the light-emitting diode, it is possible to reduce speckle. In addition, the use thereof is superior to the laser in terms of safety as compared with the case of using the semiconductor laser.

The light source section 15 preferably includes, for example, multiple types of light sources emitting light in wavelength regions different from one another, e.g., a light source 151R emitting light (red light R) in a wavelength region corresponding to a red color, a light source 151G emitting light (green light G) in a wavelength region corresponding to a green color, and a light source 151B emitting light (blue light B) in a wavelength region corresponding to a blue color. This makes it possible to expand the color gamut of light emitted to the illumination optical system 300. In addition, the light source section 15 may use, as a light source emitting the same color light beam, a light source in which luminous wavelengths are shifted from one another. This makes it possible to reduce speckle. The light source section 15 corresponds to a specific example of a "second light source section" of the present disclosure, and the red light, the green light, and the blue light emitted from the light source section 15 each correspond to a specific example of "light in a third wavelength region" of the present disclosure.

The light-condensing optical system 16 is configured by one or multiple lenses, and includes a collimator lens, for example. The light-condensing optical system 16 is disposed between the wavelength conversion section 12 and the polarization separation element 13; the light-condensing optical system 16 condenses the excitation light EL on a predetermined spot diameter to cause the excitation light EL to be incident on the phosphor layer 122, and converts the fluorescence FL emitted from the wavelength conversion section 12 into parallel light to guide it to the polarization separation elements 13 and 14.

### (1-2. Operating Principle of Light Source Device)

In the light source device 1, the light source section 11 and the light source section 15 are disposed to be opposed to each other along one direction (e.g., an X-axis direction). The wavelength conversion section 12 is disposed, for example, in a substantially orthogonal direction (e.g., a Y-axis direction) relative to an arrangement direction (X-axis direction) of the light source section 11 and the light source section 15. The polarization separation element 13 is disposed between the light source section 11 and the light source section 15 to allow the surface 13S1 and the surface 13S2 opposed to each other to form an angle of substantially 45°, for example, relative to the X-axis direction and the Y-axis direction. The polarization separation element 14 is disposed on side of the surface 13S1 of the polarization separation element 13 to allow, for example, the surface 14S1 and the surface 14S2 opposed to each other and the surface 13S1 of the polarization separation element 13 to form substantially a right angle to each other.

In the light source device 1, for example, blue light Bs (excitation light EL) including mainly S-polarized light is emitted from the light source section 11. As illustrated in FIG. 1, the blue light Bs (excitation light EL) emitted from the light source section 11 is reflected by the surface 13S1 of the polarization separation element 13, and is transmitted through the polarization separation element 14 to be incident on the light-condensing optical system 16. The blue light Bs incident on the light-condensing optical system 16 is condensed on a predetermined spot diameter, and is emitted toward the wavelength conversion section 12. In addition, a portion of the blue light Bs is first transmitted through the polarization separation element 14, thereafter is reflected by the surface 13S1 of the polarization separation element 13, and is condensed on a predetermined spot diameter in the light-condensing optical system 16 to be emitted toward the wavelength conversion section 12. The blue light Bs incident on the wavelength conversion section 12 excites phosphor particles in the phosphor layer 122. In the phosphor layer 122, the phosphor particles are excited by irradiation of the blue light Bs to emit the fluorescence FL. The fluorescence FL is randomly polarized light (yellow light beams Ys and Yp) including the S-polarized component and the P-polarized component, and is emitted toward the light-condensing optical system 16. The yellow light beams Ys and Yp incident on the light-condensing optical system 16 are each converted into parallel light, and are incident on the polarization separation element 13 or the polarization separation element 14.

In the present embodiment, the polarization separation element 13 is configured to reflect the S-polarized component and transmit the P-polarized component, whereas the polarization separation element 14 is configured to reflect the S-polarized component and transmit the P-polarized component as for yellow light as light in a predetermined wavelength region, similarly to the polarization separation element 13. Therefore, P-polarized yellow light Yp, of the fluorescence FL (yellow light beams Ys and Yp) incident on the polarization separation element 13 or the polarization separation element 14, is transmitted through the polarization separation element 13 and the polarization separation element 14. Meanwhile, S-polarized yellow light Ys incident on the polarization separation element 13 is reflected toward the polarization separation element 14 by the surface 13S1. In addition, the S-polarized yellow light Ys incident on the polarization separation element 14 is reflected toward the polarization separation element 13 by the surface 14S1. The S-polarized yellow light beams Ys incident on the polarization separation elements 13 and 14 are further reflected by the respective polarization separation surfaces (surface 13S1 and surface 14S1) to be incident on the light-condensing optical system 16, and are condensed on a predetermined spot diameter in the light-condensing optical system 16 to return to the wavelength conversion section 12. The yellow light beams Ys returned to the wavelength conversion section 12 are scattered by the phosphor layer 122 to be randomly polarized light (yellow light beams Ys and Yp) including the S-polarized component and the P-polarized component, and are incident again on the polarization separation element 13 or the polarization separation element 14. Repetition of the cycle allows only fluorescence (yellow light Yp) of the P-polarized component to be guided toward the illumination optical system 300 described later from the light source device 1 without discarding S-polarized fluorescence FL (yellow light Ys).

Red light Rs, green light Gs, and the blue light Bs, including mainly S-polarized light, are emitted as assist light from the light source section 15. The red light Rs, the green light Gs, and the blue light Bs are incident from side of the surface 13S2 of the polarization separation element 13, and is reflected by the surface 13S1. The yellow light Yp transmitted through the polarization separation element 13 is multiplexed with the red light Rs, the green light Gs, and the blue light Bs to be emitted toward the illumination optical system 300.

### (1-3. Workings and Effects)

The light source device 1 of the present embodiment includes, between the light source section 11 and the wavelength conversion section 12, the polarization separation element 13 that separates randomly polarized fluorescence FL emitted from the wavelength conversion section 12 on the basis of a polarized component, and further includes the polarization separation element 14 with wavelength selectivity that separates only the fluorescence FL on the basis of a polarized component. This enables utilization as illumination in the projection-type display apparatus 5, for example, without discarding one of polarized components of the fluorescence FL emitted from the wavelength conversion section 12. This is described below.

The light source for a projector has been shifted from existing discharge tube types to laser excitation phosphor light sources. The main reason for this is that the life of the phosphor light source is very long, i.e., about 10 times longer than that of the discharge tube type light source. Currently, the mainstream phosphor light source uses YAG (Yttrium-Aluminum-Garnet)-based phosphor in many cases. In a projector using this YAG-based phosphor as a phosphor light source, a yellow emission color in a green-to-red continuous wavelength band is dispersed into green and red for using.

However, in a wavelength spectrum of YAG, in a case where an emission wavelength is effectively utilized, achieving a white balance around D65 in a color gamut of sRGB is the limit; in a case of displaying a color gamut wider than that, a wavelength region of each primary color needs to be narrowed to enhance the property of primary colors. In that case, light of an unnecessary portion is discarded. Further, in a case where the RGB balance is changed for displaying a white point, a wavelength of green, of light emitted from the phosphor light source using the YAG-based phosphor, is to be discarded. This poses an issue of not being able to obtain sufficient luminance.

In order to solve the issue described above, it is conceivable to multiplex auxiliary light beams (e.g., R, G, B lasers) of the respective primary colors with fluorescence emitted from a phosphor light source. The above-described light source device condenses and synthesizes fluorescence light and light beams from a blue solid-state light source and a red solid-state light source in the same optical system to thereby achieve high utilization efficiency (low etendue); however, one of the polarized components is discarded in the fluorescence light synthesized in a wavelength region of the laser. In addition, the above-described light source device is configured not to be able to synthesize a green color in principle.

In contrast, in the present embodiment, there are provided, between the light source section 11 and the wavelength conversion section 12, the polarization separation element 13 that separates incident light on the basis of a polarized component and the polarization separation element 14 that selectively separates light in a predetermined wavelength region on the basis of a polarized component. Thus, one polarized component (e.g., P-polarized light (yellow light Yp)) of the fluorescence FL emitted from the wavelength conversion section 12 and is incident on the polarization separation element 13 or the polarization separation element 14 is transmitted through the polarization separation element 13 and the polarization separation element 14, and is multiplexed with the assist light (red light Rs, green light Gs, and blue light Bs) emitted from the light source section 15 to be guided to the illumination optical system 300. Meanwhile, the other polarized component (e.g., S-polarized light (yellow light Ys)) of the fluorescence FL incident on the polarization separation element 13 or the polarization separation element 14 is reflected twice by the respective polarization separation surfaces (surface 13S1 and surface 14S1) to return as light to the wavelength conversion section 12. The yellow light Ys returned to the wavelength conversion section 12 is scattered in the phosphor layer 122, and is incident again as randomly polarized light (Ys + Yp) on the polarization separation element 13 or the polarization separation element 14. Repetition of this cycle enables utilization as illumination in the projection-type display apparatus 5, for example, without discarding the S-polarized fluorescence FL (yellow light Ys).

As described above, in the light source device 1 of the present embodiment, it is possible to extract a portion of the fluorescence FL as illumination light in the projection-type display apparatus 5 without discarding it. That is, it is therefore possible to improve efficiency in extraction of light with uniform polarization. In addition, it is possible to improve efficiency of multiplexing with laser light beams of red (R), green (G), and blue (B) emitted from the auxiliary light source (light source section 15).

Further, in the present embodiment, as described above, it is possible to multiplex a portion of the fluorescence FL without discarding it, and thus to expand light intensity.

Furthermore, in the present embodiment, the auxiliary light source (light source section 15) is disposed to be opposed to the surface 13S2 of the polarization separation element 13. This makes it possible to synthesize the fluorescence FL emitted from the wavelength conversion section 12 and the laser light beams of the red (R), green (G) and blue (B) emitted from the light source section 15 in the same optical axis. Thus, it is possible to prevent deterioration of etendue. In addition, it is possible to miniaturize the light source device 1.

Further, in the light source device 1 of the present embodiment, it is possible to improve productivity and robustness to a use environment. For example, a wavelength of the semiconductor laser varies depending on the environmental temperature. For this reason, as in the light source device described above, the light source device that uses the dichroic mirror to synthesize fluorescence light and assist light involves issues of variation in a cutoff wavelength of the dichroic mirror and large environmental fluctuation and production variation due to fluctuation in the wavelength of the laser light. In contrast, the configuration of the light source device 1 of the present embodiment is not affected by the manufacturing variation of the dichroic mirror and the fluctuation in the wavelength of the laser light. This eliminates the need of strict control over the specification accuracy of the components and the operating temperature or the like of the laser, thus making it possible to reduce the manufacturing costs.

Next, description is given of second to fourth embodiments, Modification Examples 1 to 3, and application examples of the present disclosure. Hereinafter, components similar to those of the foregoing first embodiment are denoted by the same reference numerals, and descriptions thereof are omitted as appropriate.

### <2. Second Embodiment>

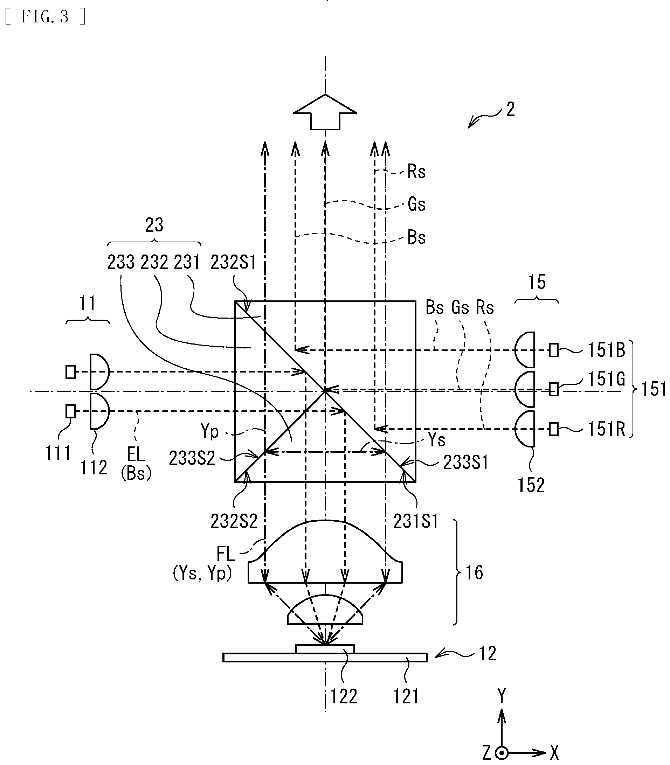

FIG. 3 illustrates a configuration example of a light source device (a light source device 2) according to a second embodiment of the present disclosure. Similarly to the above-described light source device 1, the light source device 2 is used for illumination of the projection-type display apparatus (projection-type display apparatus 5) described later, for example. In the foregoing first embodiment, the example has been given in which the plate-type polarization separation elements 13 and 14 are used; however, for example, a configuration of using a cube-type polarization separation element 23 may be adopted.

The polarization separation element 23 is configured by three prism-type polarization beam splitters (prisms 231, 232, and 233), for example. The three prisms 231, 232, and 233 form the cube-type polarization separation element 23, for example, by attaching respective one surfaces (a surface 232S1 and a surface 233S1) of the two prisms 232 and 233 to one surface (a surface 233S1) of the prism 231 with an adhesive layer 234 (unillustrated in FIG. 3) described later interposed therebetween, for example, and by attaching the other surfaces (a surface 232S2 and a surface 233S2) forming a right angle to the respective one surfaces (surface 232S1 and surface 233S1) of the two prisms 232 and 233 to each other with an adhesive layer 235 (unillustrated in FIG. 3) described later interposed therebetween, for example.

In this polarization separation element 23, an optical functional film (e.g., a PBS film 231A described later), which reflects or transmits incident light for each polarized component, is formed on the surface 231S1 of the prism 231, and an optical functional film (e.g., a PBS film 232A described later), which selectively reflects or transmits light in a predetermined wavelength region for each polarized component, is formed on the surface 232S1 of the prism 232. That is, the prism 231 corresponds to a specific example of a "first polarization separation element" of the present disclosure, and the prism 232 corresponds to a specific example of a "second polarization separation element" of the present disclosure.

The prisms 231, 232, and 233 are preferably configured using a glass material having a small photoelastic constant, for example. Further, the prisms 231, 232, and 233 may be able to be cooled. This reduces disturbance of the polarization of the fluorescence FL during transmission through the prisms 231, 232, and 233.

It is to be noted that cooling of the prisms 231, 232, and 233 may be performed via air-cooling by installing a fan or the like, for example; alternatively, the cooling thereof may be possible by attaching a heat dissipation member such as a metal plate or a water-cooled jacket to the prisms 231, 232, and 233.

In this manner, the light source device 2 of the present embodiment uses the prism-type polarization beam splitters (prisms 231 and 232), thus making it possible to reduce angular intersection between the respective polarization separation surfaces (surface 231S1 and surface 232S2). In addition, the respective polarization separation surfaces (surface 231S1 and surface 232S2) are able to be easily disposed at 45° relative to each optical axis of the excitation light EL and the assist light emitted from the light source section 11 and the light source section 15 and the fluorescence FL emitted from the wavelength conversion section 12. This makes it possible to reduce variations in the performance.

In addition, a light source device 3 of the present embodiment uses a prism-type polarization beam splitter as the polarization separation element 23, thus making it possible to reduce degradation such as warpage of a substrate, for example, as compared with the case of using the plate-type polarization beam splitter.

It is to be noted that the prisms 231, 232, and 233 may be attached together using, for example, atomic diffusion bonding, in addition to attaching using an adhesive.

### <3. Modification Examples>

### (3-1. Modification Example 1)

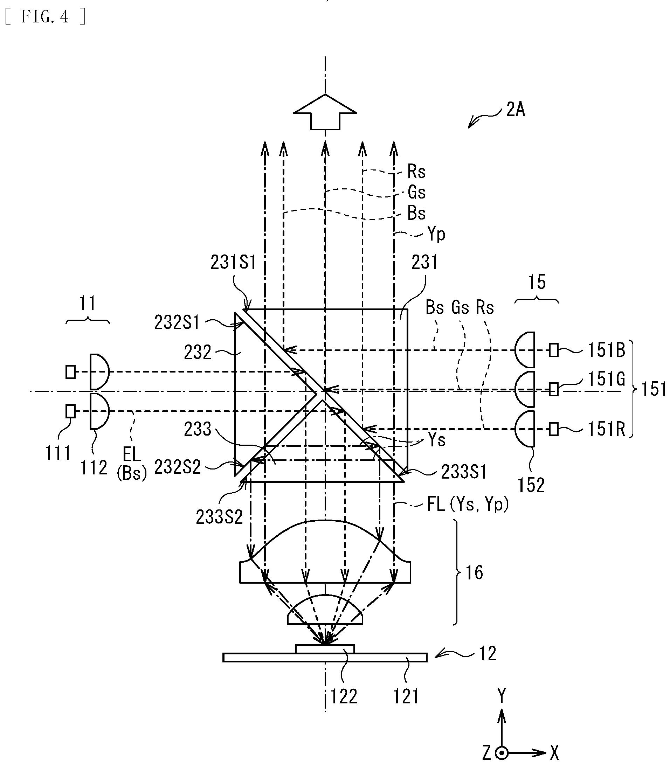

FIG. 4 illustrates a configuration example of a light source device 2A according to Modification Example 1 of the present disclosure. In the foregoing second embodiment, the example has been given in which the three prisms 231, 232, and 233 configuring the polarization separation element 23 are attached to one another; however, this is not limitative. For example, the prisms 231, 232, and 233 may be provided with a gap therebetween, and each prism may be individually held by a holder or the like.

In this manner, in the light source device 2A of the present modification example, the gaps are provided among the prisms 231, 232, and 233 configuring the polarization separation element 23, and each prism is individually held by the holder or the like, thus making it possible to prevent degradation of an adhesive layer due to transmission of the excitation light EL, for example. Thus, it is possible to improve reliability as compared with the case where the prisms 231, 232, and 233 are attached together with the adhesive layer interposed thereamong.

### (3-2. Modification Example 2)

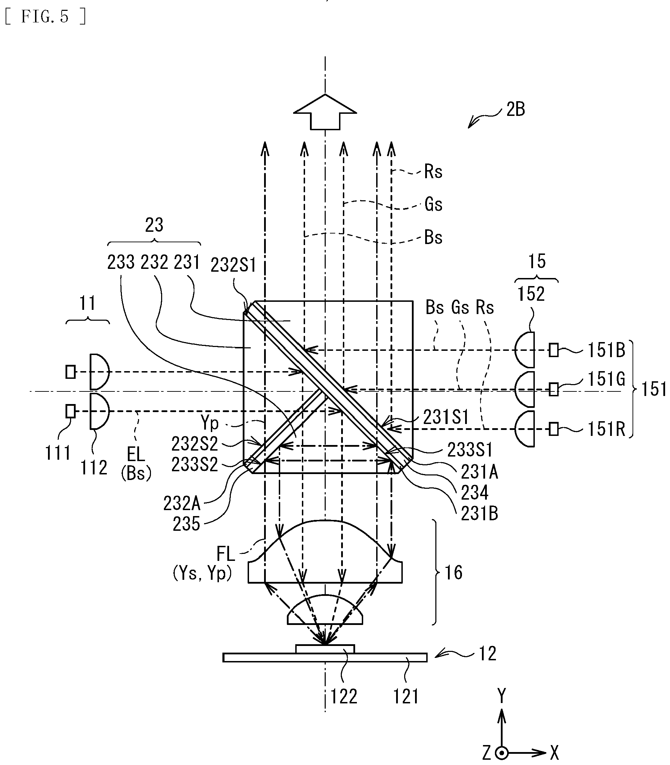

FIG. 5 illustrates a configuration example of a light source device 2B according to Modification Example 2 of the present disclosure. As illustrated in FIG. 5, it is possible to prevent degradation of the adhesive layer due to the transmission of the excitation light EL described above, for example, by providing PBS films 231A and 231B on both sides of the adhesive layer 234 by which the prism 231 and the prisms 232 and 233 are attached.

Such a polarization separation element 23 are able to be manufactured, for example, as follows. First, a PBS film 231A is formed on the surface 231S1 of the prism 231. In addition, the surface 232S2 on which the dichroic PBS film 232A of the prism 232 is formed and the surface 233 S2 of the prism 233 are attached together with the adhesive layer 235 interposed therebetween, and thereafter a PBS film 231B is formed which continues on the surface 232S1 of the prism 232 and the surface 233S1 of the prism 233. Thereafter, the surface 231S1 of the prism 231 on which the PBS film 231A is formed and each of the surface 232S1 and the surface 233S1 of the prism 232 and the prism 233 on which the PBS film 231B is formed are disposed to be opposed to each other, and are attached together by applying the adhesive layer 234 to one of the surfaces, for example. This completes the polarization separation element 23 in which the adhesive layer 234 is interposed between the PBS film 231A and the PBS film 231B.

In this manner, in the light source device 2B of the present modification example, the PBS films 231A and 231B are provided on both sides of the adhesive layer 234 by which the prism 231, the prism 232, and the prism 233 are attached together, thus allowing the excitation light EL emitted from the light source section 11 to be reflected toward the wavelength conversion section 12 without being transmitted through the adhesive layer 234. Thus, it is possible to reduce the degradation of the adhesive layer 234.

### (3-3. Modification Example 3)

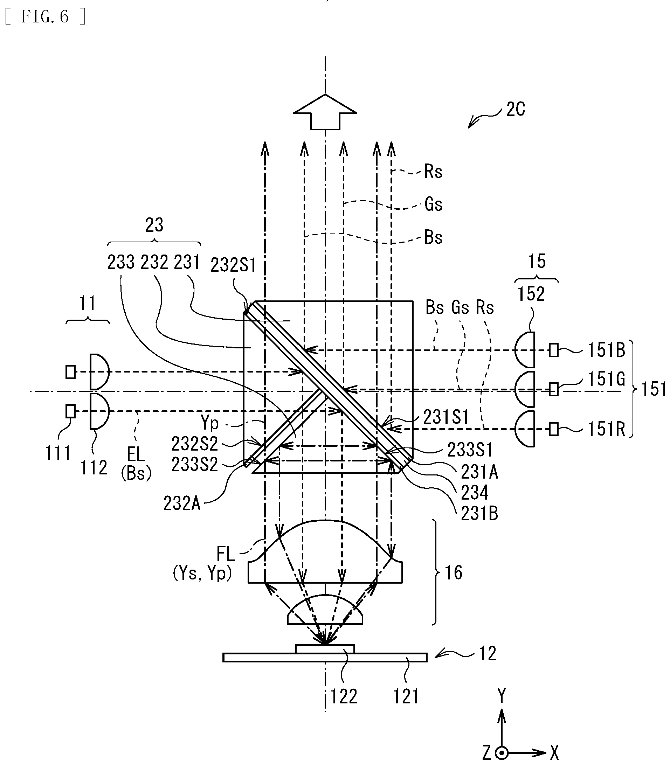

FIG. 6 illustrates a configuration example of a light source device 2C according to Modification Example 3 of the present disclosure. In the foregoing Modification Example 2, although the degradation of the adhesive layer 234 is reduced, the adhesive layer 235 to attach the prism 232 and the prism 233 together may possibly be degraded due to the transmission of the excitation light EL. Therefore, the prisms 231, 232, and 233 may be integrated by attaching the surface 232S1 of the prism 232 and the surface 233S1 of the prism 233 to the surface 231S1 of the prism 231 with the adhesive layer 234 interposed therebetween without attaching the prism 232 and the prism 233 together. At that time, a gap may be provided between the surface 232S2 and the surface 233S2 opposed to each other of the prism 232 and the prism 233.

This makes it possible to improve the reliability as compared with the case where the prism 232 and the prism 233 are attached together with the adhesive layer (e.g., adhesive layer 235) interposed therebetween.

### <4. Third Embodiment>

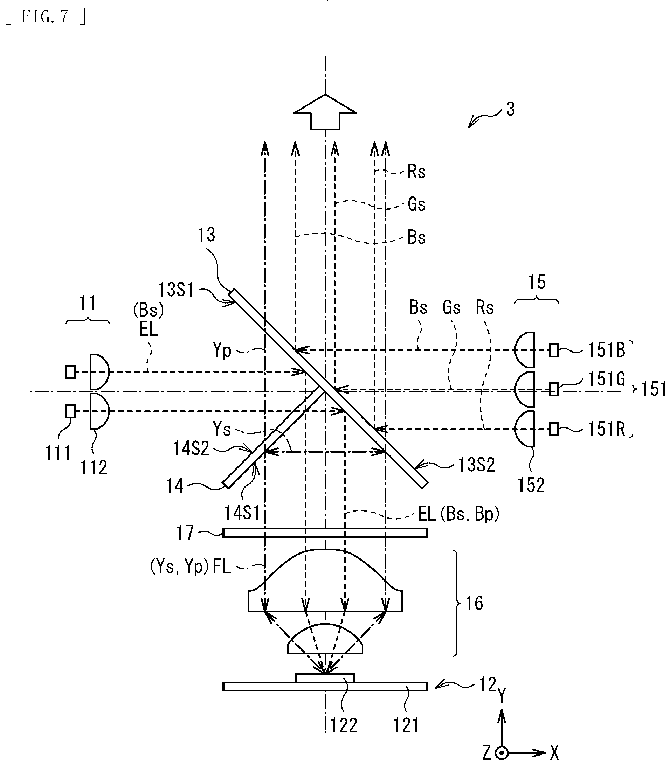

FIG. 7 illustrates a configuration example of a light source device (a light source device 3) according to a third embodiment of the present disclosure. Similarly to the above-described light source device 1, the light source device 3 is used, for example, for illumination of the projection-type display apparatus (projection-type display apparatus 5) described later. The light source device 3 of the present embodiment differs from that of the foregoing first embodiment in that a polarization conversion element 17 is provided between the wavelength conversion section 12 and the polarization separation elements 13 and 14.

The polarization conversion element 17 disturbs a polarization state of incident light before emission. Specifically, the polarization conversion element 17 disturbs a polarization state of the S-polarized fluorescence FL (yellow light Ys) returned to the wavelength conversion section 12 by being reflected twice by the surface 13S1 of the polarization separation element 13 and the surface 14S1 of the polarization separation element 14 to convert a portion thereof into a P-polarized one, thereby efficiently transmitting the fluorescence FL in the polarization separation elements 13 and 14. The polarization conversion element 17 is disposed, for example, between the polarization separation elements 13 and 14 and the light-condensing optical system 16.

It may be possible to use, as the polarization conversion element 17, for example, a depolarization film or a depolarization element such as a crystal plate. It may be possible to use, as the polarization conversion element 17, for example, a 1/4λ plate or a phase difference plate that generates a phase difference of 1/4λ + α, in addition to those mentioned above. For example, in a case where the 1/4λ plate is used as the polarization conversion element 17, the S-polarized fluorescence FL (yellow light Ys) reflected by the surface 13S1 of the polarization separation element 13 is converted into circularly polarized light to be emitted toward the wavelength conversion section 12, and is reflected by the wavelength conversion section 12 and is converted into linearly polarized light when passing through the 1/4λ plate again. The P-polarized fluorescence FL (yellow light Yp) thereof is transmitted through the polarization separation element 13 to be guided to the illumination optical system 300.

As described above, in the present embodiment, the polarization conversion element 17 is provided between the wavelength conversion section 12 and the polarization separation elements 13 and 14, specifically, between the polarization separation elements 13 and 14 and the light-condensing optical system 16, thus enabling the polarization separation element 13 to efficiently transmit the fluorescence FL. This makes it possible to efficiently multiplex the fluorescence FL with assist light, and thus to further improve efficiency in extraction of light with uniform polarization.

It is to be noted that, in the present embodiment, the example has been given in which the polarization conversion element 17 is disposed separately; however, for example, configuring a lens included in the light-condensing optical system 16 by using, for example, a collimator glass material with birefringence makes it possible to add a function as the polarization conversion element. This makes it possible to further improve the efficiency in extraction of light with uniform polarization while suppressing the number of parts in the light source device.

### <5. Fourth Embodiment>

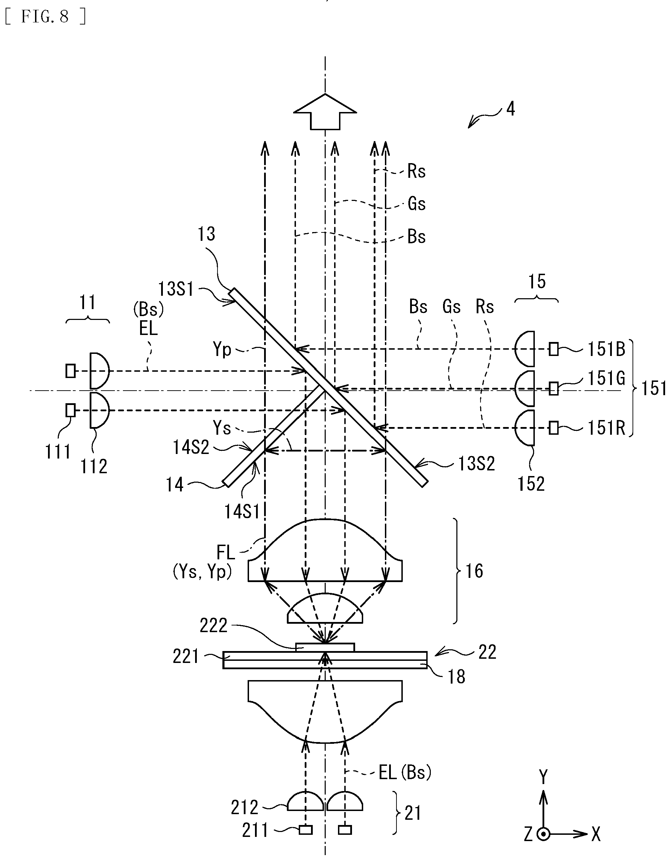

FIG. 8 illustrates a configuration example of a light source device (a light source device 4) according to a fourth embodiment of the present disclosure. Similarly to the above-described light source device 1, the light source device 4 is used for illumination of the projection-type display apparatus (projection-type display apparatus 5) described later, for example. The light source device 4 of the present embodiment differs from that of the foregoing first embodiment in that a phosphor layer 222 is further irradiated with the excitation light EL from a rear surface of a support substrate 221 configuring a wavelength conversion section 22.

Similarly to the foregoing first embodiment, in the light source device 4, the light source section 11 and the light source section 15 are disposed to be opposed to each other along one direction (e.g., X-axis direction), and the wavelength conversion section 22 is disposed, for example, in a substantially orthogonal direction (e.g., Y-axis direction) relative to an arrangement direction (X-axis direction) of the light source section 11 and the light source section 15. The polarization separation element 13 is disposed between the light source section 11 and the light source section 15 to allow the surface 13S1 and the surface 13S2 opposed to each other to form an angle of substantially 45°, for example, relative to the Y-axis direction. The polarization separation element 14 is disposed on side of the surface 13S1 of the polarization separation element 13 to allow, for example, the surface 14S1 and the surface 14S2 opposed to each other and the surface 13S1 of the polarization separation element 13 to form substantially a right angle to each other. In the present embodiment, a light source section 21 that emits the excitation light EL is further disposed on side of a rear surface of the wavelength conversion section 22 along the Y-axis direction. For example, a color separation element 18 and a lens 19 are disposed between the light source section 21 and the wavelength conversion section 22,.

Similarly to the light source section 11, the light source section 21 includes one or multiple light sources 211 and lenses 212 disposed to be opposed to the respective light sources 211. The light source 211 is provided to excite phosphor particles included in the phosphor layer 222 of the wavelength conversion section 22, and, for example, the LD is able to be used therefor. Alternatively, the LED may be used.

The wavelength conversion section 22 converts light (excitation light EL) emitted from the light source section 21 into light (fluorescence FL) in a different wavelength region and emits the light; the wavelength conversion section 22 corresponds to a specific example of the "wavelength conversion section" of the present disclosure. In the wavelength conversion section 22, for example, the phosphor layer 222 is provided on the support substrate 221 having light-transmissivity, and the color separation element 18 is provided on a surface, of the support substrate 221, on side opposite to the surface on which the phosphor layer 222 is formed, e.g., on a surface opposed to the light source section 21.

The color separation element 18 includes, for example, a dichroic mirror, and separates incident light on the basis of a wavelength region. Specifically, the color separation element 18 is configured to transmit the excitation light EL and to reflect the fluorescence FL.

It is to be noted that, although FIG. 8 illustrates an example in which the color separation element 18 is integrally formed with the support substrate 221, the color separation element 18 may be disposed separately from the wavelength conversion section 22.

Similarly to the light-condensing optical system 16, the lens 19 is configured, for example, by one or multiple lenses, and includes, for example, a collimator lens. The lens 19 is disposed between the light source section 21 and the wavelength conversion section 22, and causes the excitation light EL to be incident on the phosphor layer 222 in a manner to be condensed on a predetermined spot diameter.

In this manner, the phosphor layer 222 may be irradiated with the excitation light EL in both directions of a front surface and a rear surface. The irradiation of the excitation light EL in the both directions of the front surface and the rear surface suppresses reduction in the conversion efficiency of the wavelength conversion section 22 due to a luminance saturation phenomenon, as compared with the case of irradiation with the excitation light EL in one direction, thus making it possible to improve the efficiency of the light source. Thus, it is possible to achieve higher luminance.

### <6. Application Examples>

### <Application Example 1>

FIG. 9 is a functional block diagram illustrating an overall configuration of the projection-type display apparatus (projection-type display apparatus 5) according to Application Example 1. This projection-type display apparatus 5 is, for example, a display apparatus that projects an image on a screen 68 (projection surface). The projection-type display apparatus 5 is coupled to an unillustrated external image supply apparatus, for example, a computer such as a PC or various image players via an I/F (interface), and performs projection onto the screen 68 on the basis of an image signal inputted to the interface.

The projection-type display apparatus 5 includes, for example, a light source drive unit 51, the light source device 1, a light modulation device 52, a projection optical system 53, an image processing unit 54, a frame memory 55, a panel drive unit 56, a projection optical system drive unit 57, and a control unit 50.

The light source drive unit 51 outputs a signal to control an emission timing of the light source (light source 111 and light source 151) disposed in the light source device 1. The light source drive unit 51 includes, for example, a PWM setting section, a PWM signal generation section, a limiter, and the like, which are unillustrated. The light source drive unit 51 controls a light source driver of the light source device 1 under the control of the control unit 50, and performs PWM control on the light source 111 and the light source 151 to thereby turn on or off the light source 111 and the light source 151 or adjust the luminance.

Although not particularly illustrated, the light source device 1 includes, in addition to the components described in the foregoing first embodiment, for example, the light source driver that drives each of the light source 111 and the light source 151, and a current value setting section that sets each of current values when driving the light source 111 and the light source 151. On the basis of power supplied from an unillustrated power source circuit, the light source driver generates a current with a current value set by the current value setting section in synchronization with a signal inputted from the light source drive unit 51. The generated current is supplied to each of the light source 111 and the light source 151.

On the basis of an image signal, the light modulation device 52 modulates light (illumination light) outputted from the light source device 1 to generate image light. The light modulation device 52 includes, for example, three transmissive or reflective light valves corresponding to respective colors of RGB described later. Examples thereof include a liquid crystal panel that modulates blue light (B), a liquid crystal panel that modulates red light (R), and a liquid crystal panel that modulates green light (G). It may be possible to use, as the reflective liquid crystal panel, for example, a liquid crystal element such as LCOS (Liquid Crystal On Silicon). However, as the light modulation device 52, there may be used not only the liquid crystal element, but also another light modulation element, e.g., DMD (Digital Micromirror Device), etc. Respective color light beams of the RGB modulated by the light modulation device 52 are synthesized by an unillustrated cross dichroic prism or the like to be guided to the projection optical system 53.

The projection optical system 53 includes a lens group or the like to form an image by projecting light modulated by the light modulation device 52 onto the screen 68.

The image processing unit 54 acquires an externally inputted image signal, and makes determination of an image size, determination of resolution, determination of whether a still image or a moving image, and the like. In a case of a moving image, attributes of image data such as frame rates are also determined. In addition, in a case where resolution of the acquired image signal differs from display resolution of each liquid crystal panel of the light modulation device 52, resolution conversion processing is performed. The image processing unit 54 develops the image after each processing in the frame memory 55 for each frame, and outputs, as a display signal, the image for each frame developed in the frame memory 55 to the panel drive unit 56.

The panel drive unit 56 drives each liquid crystal panel of the light modulation device 52. Driving the panel drive unit 56 changes a transmittance of light in each of pixels arranged on each liquid crystal panel, thus allowing an image to be formed.

The projection optical system drive unit 57 includes a motor that drives a lens disposed in the projection optical system 53. Under the control of the control unit 50, the projection optical system drive unit 57 drives the projection optical system 53, for example, and performs zoom adjustment, focus adjustment, aperture adjustment, and the like, for example.

The control unit 50 controls the light source drive unit 51, the image processing unit 54, the panel drive unit 56, and the projection optical system drive unit 57.

In this projection-type display apparatus 5, for example, providing the above-described light source device 1 makes it possible to achieve simplification and miniaturization of the entire apparatus.

### (Configuration Example 1 of Projection-Type Display Apparatus)

FIG. 10 is a schematic view of an example (a projection-type display apparatus 5A) of an overall configuration of an optical system configuring the projection-type display apparatus 5. The projection-type display apparatus 5A is a projection-type display apparatus of a reflective 3LCD type that performs light modulation using a reflective liquid crystal panel (Liquid Crystal Display: LCD).

As illustrated in FIG. 10, the projection-type display apparatus 5A includes the light source device 1, the illumination optical system 300, an image-forming unit 400, and a projection optical system 500 in order.

For example, the illumination optical system 300 includes, from a position close to the light source device 1, fly-eye lenses 310 (310A and 310B), a polarization conversion element 320, a lens 330, dichroic mirrors 340A and 340B, reflective mirrors 350A and 350B, lenses 360A and 360B, a dichroic mirror 370, and polarizing plates 380A to 380C.

The fly-eye lenses 310 (310A and 310B) homogenize an illuminance distribution of illumination light from the light source device 1. The polarization conversion element 320 functions to align a polarization axis of incident light in a predetermined direction. For example, the polarization conversion element 320 converts randomly polarized light into P-polarized light. The lens 330 condenses light from the polarization conversion element 320 toward the dichroic mirrors 340A and 340B. The dichroic mirrors 340A and 340B selectively reflect light in a predetermined wavelength region, and selectively transmit light in a wavelength region other than the predetermined wavelength region. For example, the dichroic mirror 340A reflects mainly red light Lr and green light Lg in a direction of the reflective mirror 350A. In addition, the dichroic mirror 340B reflects mainly blue light Lb in a direction of the reflective mirror 350B. The reflective mirror 350A reflects light (mainly red light Lr and green light Lg) from the dichroic mirror 340A toward the lens 360A, and the reflective mirror 350B reflects light (mainly blue light Lb) from the dichroic mirror 340B toward the lens 360B. The lens 360A transmits light (mainly red light Lr and green light Lg) from the reflective mirror 350A, and condenses the light on the dichroic mirror 370. The dichroic mirror 370 selectively reflects green light Lg toward the polarizing plate 380C, and selectively transmits light in a wavelength region other than the green light Lg. The polarizing plates 380A to 380C include a polarizer having a polarization axis in a predetermined direction. For example, in a case where the polarization conversion element 320 performs conversion into P-polarized light, the polarizing plates 380A to 380C transmit P-polarized light, and reflect S-polarized light.

The image-forming unit 400 includes reflective polarizing plates 410A to 410C, reflective liquid crystal panels 420A to 420C (light modulation element), and a dichroic prism 430.

The reflective polarizing plates 410A to 410C respectively transmit light (e.g., P-polarized light) having the same polarization axis as the polarization axis of polarized light from the polarizing plates 380A to 380C, and reflect light (S-polarized light) having any other polarization axis. Specifically, the reflective polarizing plate 410A transmits P-polarized red light Lr from the polarizing plate 380A in a direction of the reflective liquid crystal panel 420A. The reflective polarizing plate 410B transmits P-polarized blue light Lb from the polarizing plate 380B in a direction of the reflective liquid crystal panel 420B. The reflective polarizing plate 410C transmits P-polarized green light Lg from the polarizing plate 380C in a direction of the reflective liquid crystal panel 420C. In addition, the reflective polarizing plate 410A reflects S-polarized red light Lr from the reflective liquid crystal panel 420A to cause the S-polarized red light Lr to be incident on the dichroic prism 430. The reflective polarizing plate 410B reflects S-polarized blue light Lb from the reflective liquid crystal panel 420B to cause the S-polarized blue light Lb to be incident on the dichroic prism 430. The reflective polarizing plate 410C reflects S-polarized green light Lg from the reflective liquid crystal panel 420C to cause the S-polarized green light Lg to be incident on the dichroic prism 430.

The reflective liquid crystal panels 420A to 420C respectively perform spatial modulation of red light Lr, blue light Lb, and green light Lg.

The dichroic prism 430 synthesizes incident red light Lr, incident blue light Lb, and incident green light Lg, and outputs synthesized light toward the projection optical system 500.

The projection optical system 500 includes, for example, multiple lenses, or the like. The projection optical system 500 expands light emitted from the image-forming unit 400, and projects the expanded light on a screen 600, or the like.

### (Configuration Example 2 of Projection-Type Display Apparatus)

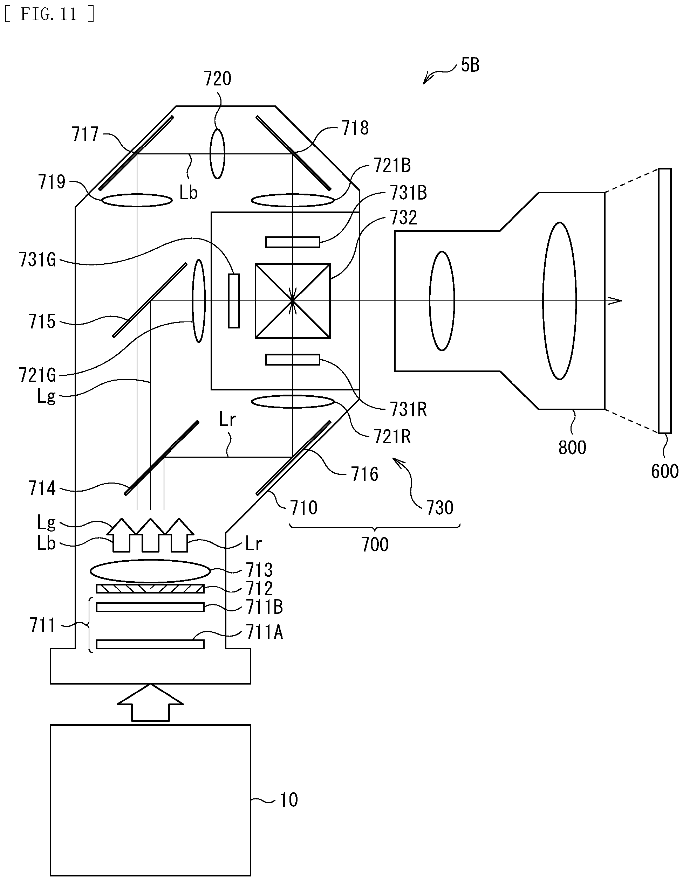

FIG. 11 is a schematic view of another example (a projection-type display apparatus 5B) of the overall configuration of the optical system configuring the projection-type display apparatus 5. The projection-type display apparatus 5B is a projection-type display apparatus of a transmissive 3LCD type that performs light modulation using a transmissive liquid crystal panel (LCD).

The projection-type display apparatus 5B includes, for example, the light source device 1, an image-generating system 700 including an illumination optical system 710 and an image-generating section 730, and the projection optical system 500 in order.

The illumination optical system 710 includes, for example, an integrator element 711, a polarization conversion element 712, and a condensing lens 713. The integrator element 711 includes a first fly-eye lens 711A and a second fly-eye lens 711B. The first fly-eye lens 711A includes multiple microlenses arranged two-dimensionally, and the second fly-eye lens 711B includes multiple microlenses arranged to correspond one by one to the respective microlenses of the first fly-eye lens 711A.

Light (parallel light) incident on the integrator element 711 from the light source device 1 is divided into multiple light fluxes by the microlenses of the first fly-eye lens 711A, and an image of each of the light fluxes is formed on a corresponding one of the microlenses of the second fly-eye lens 711B. Each of the microlenses of the second fly-eye lens 711B serves as a secondary light source, and multiple parallel light beams having uniform luminance are irradiated as incident light to the polarization conversion element 712.

The integrator element 711 has a function of arranging incident light irradiated from the light source device 1 to the polarization conversion element 712 in a uniform luminance distribution as a whole.

The polarization conversion element 712 has a function of aligning a polarization state of incident light incident thereon through the integrator element 711, or the like. The polarization conversion element 712 outputs emission light including the blue light Lb, the green light Lg, and the red light Lr through the lens, or the like, disposed on emission side of the light source device 1, for example.

The illumination optical system 710 further includes a dichroic mirror 714, a dichroic mirror 715, a mirror 716, a mirror 717, a mirror 718, a relay lens 719, a relay lens 720, a field lens 721R, a field lens 721G, a field lens 721B, liquid crystal panels 731R, 731G, and 731B as the image-generating section 730, and a dichroic prism 732.

The dichroic mirror 714 and the dichroic mirror 715 have properties of selectively reflecting color light in a predetermined wavelength region, and transmitting light in a wavelength region other than the predetermined wavelength region. For example, the dichroic mirror 714 selectively reflects the red light Lr. The dichroic mirror 715 selectively reflects the green light Lg of the green light Lg and the blue light Lb that have been transmitted through the dichroic mirror 714. The remaining blue light Lb is transmitted through the dichroic mirror 715. Thus, light (e.g., white multiplexed light Lw) emitted from the light source device 1 is separated into multiple color light beams having different colors.

The separated red light Lr is reflected by the mirror 716, and becomes parallel through passing through the field lens 721R, and thereafter is incident on the light crystal panel 731R for red light modulation. The green light Lg becomes parallel through passing through the field lens 721G, and thereafter is incident on the liquid crystal panel 731G for green light modulation. The blue light Lb passes through the relay lens 719, and is reflected by the mirror 717, and further passes through the relay lens 720, and is reflected by the mirror 718. The blue light Lb reflected by the mirror 718 becomes parallel through passing through the field lens 721B, and thereafter is incident on the liquid crystal panel 731B for modulation of the blue light Lb.

The liquid crystal panels 731R, 731G, and 731B are electrically coupled to an unillustrated signal source (e.g., a PC, etc.) that supplies an image signal including image information. The liquid crystal panels 731R, 731G, and 731B modulate incident light for each pixel on the basis of supplied image signals of respective colors to respectively generate a red image, a green image, and a blue image. Modulated light beams of respective colors (formed images) are incident on the dichroic prism 732 to be synthesized. The dichroic prism 732 superimposes the light beams of respective colors incident in three directions on one another to synthesize the light beams, and outputs the synthesized light beams toward the projection optical system 500.

The projection optical system 500 includes, for example, multiple lenses and the like. The projection optical system 500 expands light emitted from the image-generating system 700, and projects the light onto the screen 600.

### <Application Example 2>

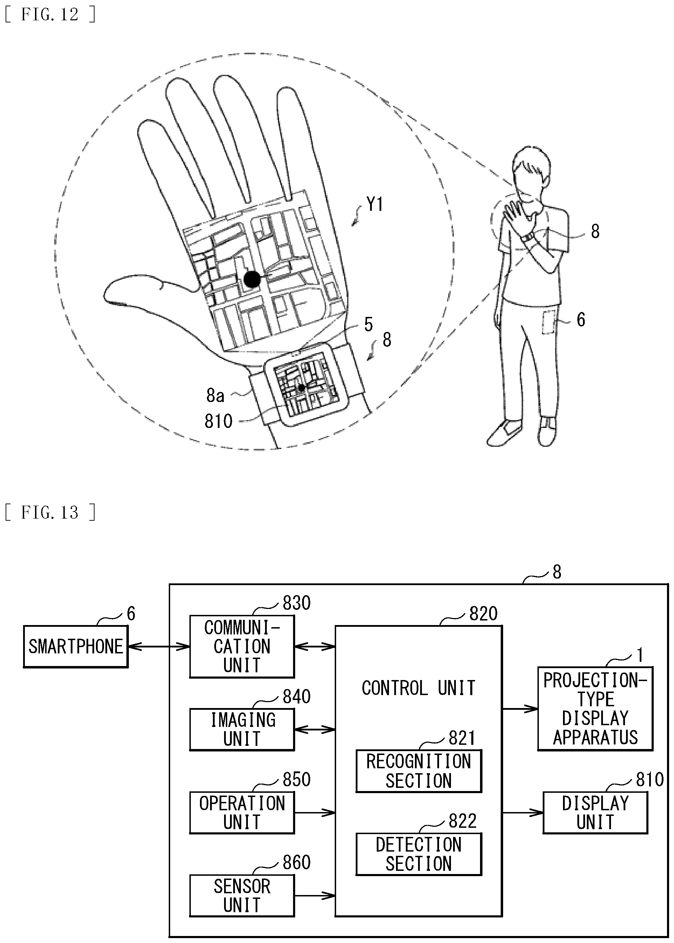

FIG. 12 schematically illustrates a configuration of a display system according to Application Example 2. FIG. 13 illustrates a functional configuration of the display system according to Application Example 2. The display system includes a wristband-type terminal (a wristband-type information processor) 8 and a smartphone (external apparatus) 6.

The smartphone 6 is, for example, an information processor that operates in cooperation with the wristband-type terminal 8, and has a function of transmitting an image to be projected or displayed to the wristband-type terminal 8 and of receiving information indicating a user operation. Specifically, the smartphone 6 transmits an image indicating a graphical user interface (GUI) to the wristband-type terminal 8, and receives a user operation signal for the GUI. Then, the smartphone 6 performs processing in response to the received user operation, and transmits an image indicating the GUI updated in response to the processing to the wristband-type terminal 8.

It is to be noted that the external apparatus operating in cooperation with the wristband-type terminal 8 is not limited to the smartphone, but may be any other information processor, for example, a digital still camera, a digital video camera, PDA (Personal Digital Assistants), a PC (Personal Computer), a notebook PC, a tablet terminal, a mobile phone terminal, a portable music player, a portable video processor, or a portable gaming machine.

The wristband-type terminal 8 includes, for example, a display unit 810, and the projection-type display apparatus 5 including the light source device (e.g., light source device 1) of the foregoing embodiment, or the like, and is used to be worn on a wrist, or the like of a user using a band part 7a. The band part 7a is configured by leather, metal, fiber, rubber or the like, for example, similarly to a wristwatch band.

The wristband-type terminal 8 further includes, for example, a control unit 820, a communication unit 830, an imaging unit 840, an operation unit 850, and a sensor unit 860, as illustrated in FIG. 13. In addition, the wristband-type terminal 8 is coupled to the smartphone 6 by wireless communication, and operates in cooperation with the smartphone 6. For example, an image received from the smartphone 6 placed in a pocket or the like of clothing of the user is able to be displayed on the display unit 810 or projected onto a palm or the like of the user using the projection-type display apparatus 5.

The display unit 810 displays an image (a still image or a moving image) under the control of the control unit 820, and includes, for example, an LCD, an OLED (Organic Light-Emitting Diode), or the like. The display unit 810 is configured integrally with the operation unit 850, for example, and functions as a so-called touch panel.

The communication unit 830 transmits and receives signals (such as image signals and user operation signals) to and from the smartphone 6. Examples of a communication method include methods of wireless, Bluetooth (registered trademark), WiHD (Wireless High Definition), WLAN (Wireless Local Area Network), Wi-Fi (Wireless Fidelity: registered trademark), NFC (Near Field communication), infrared communication, and the like. In addition, other than those mentioned above, communication using radio waves in 3G/LTE (Long Term Evolution) or a millimeter wave band may be performed.

The imaging unit 840 includes, for example, a lens section including an imaging lens, an aperture, a zoom lens, a focus lens, and the like, a drive section that drives the lens section to perform a focusing operation or a zooming operation, and a solid-state imaging element that generates an imaging signal on the basis of imaging light obtained through the lens section. The solid-state imaging element is configured by, for example, a CCD (Charge Coupled Device) or CMOS (Complementary Metal Oxide Semiconductor) image sensor, etc. The imaging unit 840 outputs, to the control unit 820, data of a captured image having been turned into a digital signal.

The operation unit 850 has a function of receiving an input signal (user operation signal) from the user. For example, the operation unit 850 is configured by buttons, a touch sensor, or a trackball. Here, the operation unit 850 is configured integrally with the display unit 810, thereby functioning as a touch panel. This operation unit 850 outputs the inputted user operation signal to the control unit 820.

The sensor unit 860 has a function of acquiring information regarding a user's motion or state. For example, the sensor unit 860 is provided with a camera that is intended to capture an image of a user's face or eye, or the hand to which the wristband-type terminal 8 is attached. Other than those described above, for example, the sensor unit 860 may include a camera with a depth detecting function, a microphone, a GPS, an infrared sensor, a ray sensor, a myoelectric sensor, a nerve sensor, a sphygmus sensor, a body heat sensor, a gyroscope sensor, an acceleration sensor, a touch sensor, or the like. Among these, the myoelectric sensor, the nerve sensor, the sphygmus sensor, and the body heat sensor may be provided in the band part 7a. Such a sensor unit 860 is able to perform a sensing operation near the user's hand, thereby allowing for accurate detection of the motion of the hand. The sensor unit 860 senses a user's motion or state, and then outputs information indicating the sensing result to the control unit 820.

The control unit 820 functions as a processor and a controller, and controls an overall operation inside the wristband-type terminal 8 in accordance with various programs. The control unit 820 is configured by a CPU (Central Processing Unit) or a microphone processor, for example. This control unit 820 may include, for example, ROM (Read Only Memory) that stores programs, arithmetic parameters, or the like to be used and RAM (Random Access Memory) that temporarily stores parameters or the like varying as appropriate.

The control unit 820 includes a recognition section 821 and a detection section 822, for example, which allow for gesture input. The recognition section 821 has a function of recognizing the motion of the user's hand to which the band part 7a is attached. Specifically, the recognition section 821 recognizes the motion of the hand through, for example, motion recognition and image recognition using an image (e.g., image of captured user's hand) inputted from the sensor unit 860. The control unit 820 performs various types of processing, such as screen transition, on the basis of the recognition result from the recognition section 821. The detection section 822 has a function of detecting a user operation on an image Y1 projected by the projection-type display apparatus 5. For example, the detection section 822 detects a user operation on the projected image, such as a flick or a touch. The control unit 820 transmits information indicating the user operation detected by the detection section 822 to the smartphone 6. Then, the smartphone 6 performs processing in accordance with the user operation. This enables the wristband-type terminal 8 to execute, on the display unit 810 or the user's hand, a function (image transition, etc.) that is similar to a function to be performed in a case where the user performs an operation (a flick or a touch, etc.) on the touch panel of the smartphone 6. For example, when the user flicks the projected image Y1 vertically, the wristband-type terminal 8 is able to perform a function of scrolling the projected image Y1.

It is to be noted that, in the example of FIG. 12, a map image generated in the smartphone 6 using a GPS (Global Positioning System) function is displayed on the display unit 810, and is projected as the projected image Y1. The display unit 810 has a limitation on its physical size, because the wristband-type terminal 8 is intended to achieve portability; in some cases, it is difficult for the user to see an image displayed on the display unit 810. In such cases, the projection-type display apparatus 5 is used to project the image onto the hand in an expanded manner, for example, to an inch size equivalent to that of the smartphone 6, thus making it possible to enhance the visibility of the image. In addition, it is possible for the user to see an image, on his or her hand, which is received from the smartphone 6 being still placed in a pocket or a bag, thus leading to improvement in the usability.

In a display system as described above, in a case of adjusting the color balance of illumination light from the light source device 1, or in a case of utilizing infrared light in the sensor unit 860, for example, it is possible to suitably use the light source device (e.g., light source device 1) in the foregoing embodiments and the like.

### <Application Example 3>

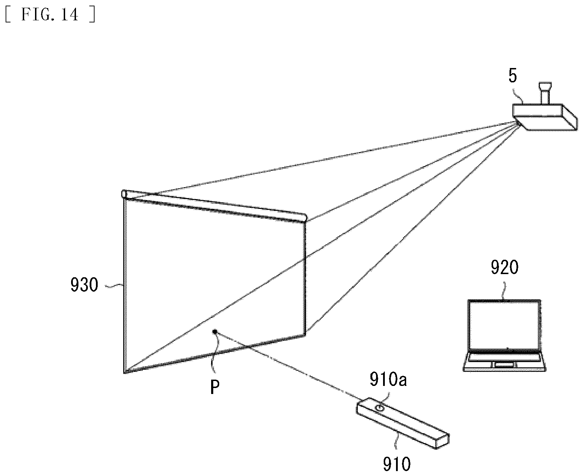

FIG. 14 schematically illustrates a configuration of a display system according to Application Example 3. This display system includes the projection-type display apparatus 5 provided with the light source device (e.g., light source device 1) in the foregoing embodiments and the like, a laser pointer 910, and a PC 920 that outputs a content to be projected to the projection-type display apparatus 5. Examples of the content to be proj ected include a diagram, a text, any other various graphic image, a map, and a website.

The laser pointer 910 has a function of irradiating laser light (invisible light or visible light) in accordance with a user's pressing operation of an operation button 910a. It may be possible for the user to use the laser pointer 910 to irradiate an image projected onto a screen 930 with the laser light. This enables the user to, for example, make a presentation while pointing to an irradiation position P in line with a referenced area.

The PC 920 generates image data to be projected, and transmits this image data to the projection-type display apparatus 5 in a wired or wireless manner to control the projection. In FIG. 14, a notebook PC is illustrated as an example thereof; however, the PC 920 is not limited to the notebook PC, and may be a desktop PC or a server on a network (cloud).

In this application example, the projection-type display apparatus 5 includes an imaging unit that projects an image received from the PC 920 onto the screen 930, and recognizes the irradiation of the projected image with the laser pointer 910. The imaging unit enables detection using the laser light (invisible light or visible light) with which the screen 930 is irradiated. This imaging unit may be mounted either inside or outside the projection-type display apparatus 5. By using the light source device (e.g., light source device 1) in the foregoing embodiments and the like in the projection-type display apparatus 5, it is possible to output synthesized light beams of multiple wavelengths by using a single light source, as described above. This eliminates the need to separately provide a light source for projection and a light source for imaging, thus making it possible to achieve simplification and compactness of the entire apparatus.

Although the description has been given above of the first to fourth embodiments, Modification Examples 1 to 3, and application examples, the present disclosure is not limited to the foregoing embodiments and the like, and may be modified in a wide variety of ways. For example, in the foregoing embodiments and the like, the example has been given in which a laser that oscillates visible light such as red light, green light, and blue light, or UV light is used for the light source section 11 and the light source section 15; however, for example, infrared light (infrared ray: IR) or the like may also be used.

In addition, the arrangement, the number, or the like of the components (e.g., the light source sections 11 and 15, the wavelength conversion section, the polarization separation elements 13 and 14, the light-condensing optical system 16, etc.) of the optical system exemplified in the foregoing embodiments and the like are merely exemplary; not all the components need to be provided, and other components may be further provided.

Further, the projection display apparatus and the display system that have been described as application examples of the light source device (e.g., the light source device 1) in the foregoing embodiments and the like are exemplary, and are not limited to those described above. For example, the light source device of the present disclosure is also applicable to a night vision apparatus (night vision system) that uses infrared light.

Further, as the projection display apparatus according to the present disclosure, an apparatus other than the foregoing projection-type display apparatus 5 (5A or 5B) may be configured. In addition, the light source device according to the present disclosure may be used for an apparatus other than the projection display apparatus. For example, the light source device 1 according to the present disclosure may be used for illumination, and is applicable to a light source for a headlight of an automobile or a light source for lighting up, for example.

It is to be noted that the effects described herein are merely illustrative and are not limited to the description, and may have other effects.

The present technology may also have the following configurations. According to the present technology having the following configurations, a polarization separation element that separates light in a second wavelength region emitted from a wavelength conversion section on the basis of polarization is provided between a first light source section and the wavelength conversion section, and a color separation element that performs separation also on the basis of a wavelength region of incident light is provided between the polarization separation element and a first light source section, thereby improving utilization efficiency of fluorescence (light in the second wavelength region) emitted from the wavelength conversion section. Thus, it is possible to improve efficiency in extraction of light with uniform polarization.
(1) Alight source device including:
   a first light source section that emits light in a first wavelength region;
   a wavelength conversion section disposed on an optical path of the light in the first wavelength region, the wavelength conversion section being excited by the light in the first wavelength region emitted from the first light source section to emit light in a second wavelength region different from the first wavelength region;
   a first polarization separation element that separates the light in the second wavelength region emitted from the wavelength conversion section on the basis of polarization; and
   a second polarization separation element disposed together with the first polarization separation element between the first light source section and the wavelength conversion section, the second polarization separation element having wavelength selectivity.
(2) The light source device according to (1), in which a first polarization separation surface of the first polarization separation element and a second polarization separation surface of the second polarization separation element are disposed in orientations forming substantially a right angle to each other.
(3) The light source device according to (1) or (2), in which
   the first polarization separation element acts on the light in the first wavelength region and the light in the second wavelength region, and
   the second polarization separation element acts only on the light in the second wavelength region.
(4) The light source device according to any one of (1) to (3), in which the first polarization separation element and the second polarization separation element each include a plate-type polarization beam splitter.
(5) The light source device according to any one of (1) to (3), in which
   the first polarization separation element and the second polarization separation element each include a prism-type polarization beam splitter,
   the first polarization separation element is provided with a first polarization beam splitter film formed on a first surface of a first prism, and
   the second polarization separation element is provided with a second polarization beam splitter film formed on a second surface of a second prism, the second surface forming substantially a right angle to the first surface.
(6) The light source device according to (5), further including a third prism, in which
   the first prism, the second prism, and the third prism are configured to have substantially a cube shape and to be spaced apart from one another.
(7) The light source device according to (5), further including a third prism, in which
   the first prism, the second prism, and the third prism are integrally formed to have substantially a cube shape, with an adhesive layer interposed thereamong.
(8) The light source device according to (7), in which
   a third polarization beam splitter film having same property as the first polarization beam splitter film is further provided on a third surface, of the second prism, opposed to the first surface and on a fourth surface, of the third prism, opposed to the first surface, and
   the adhesive layer is provided between the first polarization beam splitter film and the third polarization beam splitter film.
(9) The light source device according to any one of (1) to (8), further including a second light source section that emits light in a third wavelength region different from the light in the second wavelength region.
(10) The light source device according to any one of (4) to (9), in which the second light source section includes multiple light sources that emit light beams in wavelength regions different from one another.
(11) The light source device according to any one of (1) to (10), in which the first polarization separation element also serves as an optical path synthesizing element.
(12) The light source device according to any one of (9) to (11), in which the light in the second wavelength region and the light in the third wavelength region are subjected to optical path synthesis by the first polarization separation element.
(13) The light source device according to any one of (1) to (12), further including a light-condensing optical system between the wavelength conversion section and the second polarization separation element.
(14) The light source device according to (13), in which the light-condensing optical system includes a collimator lens.
(15) The light source device according to any one of (1) to (14), further including a polarization conversion element disposed between the wavelength conversion section and the second polarization separation element, the polarization conversion element changing polarization of the light in the second wavelength region reflected by the first polarization separation element.
(16) The light source device according to (15), in which the polarization conversion element includes a depolarization element.
(17) The light source device according to (15), in which the polarization conversion element includes a phase difference plate.
(18) The light source device according to any one of (1) to (17), in which the wavelength conversion section includes a phosphor and a holding part that holds the phosphor.
(19) The light source device according to (18), in which the wavelength conversion section further includes a drive part that rotates the holding part.
(20) A proj ection-type display apparatus including:
   a light source device;
   a light modulation element that modulates light emitted from the light source device; and
   a projection optical system that projects light from the light modulation element,
   the light source device including
      a first light source section that emits light in a first wavelength region,
      a wavelength conversion section disposed on an optical path of the light in the first wavelength region, the wavelength conversion section being excited by the light in the first wavelength region emitted from the first light source section to emit light in a second wavelength region different from the first wavelength region,
      a first polarization separation element that separates the light in the second wavelength region emitted from the wavelength conversion section on the basis of polarization, and
      a second polarization separation element disposed together with the first polarization separation element between the first light source section and the wavelength conversion section, the second polarization separation element having wavelength selectivity.

This application claims the benefit of Japanese Priority Patent Application JP2019-239311 filed with the Japan Patent Office on December 27, 2019, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. Alight source device comprising:
a first light source section that emits light in a first wavelength region;
a wavelength conversion section disposed on an optical path of the light in the first wavelength region, the wavelength conversion section being excited by the light in the first wavelength region emitted from the first light source section to emit light in a second wavelength region different from the first wavelength region;
a first polarization separation element that separates the light in the second wavelength region emitted from the wavelength conversion section on a basis of polarization; and
a second polarization separation element disposed together with the first polarization separation element between the first light source section and the wavelength conversion section, the second polarization separation element having wavelength selectivity.

2. The light source device according to claim 1, wherein a first polarization separation surface of the first polarization separation element and a second polarization separation surface of the second polarization separation element are disposed in orientations forming substantially a right angle to each other.

3. The light source device according to claim 1, wherein
the first polarization separation element acts on the light in the first wavelength region and the light in the second wavelength region, and
the second polarization separation element acts only on the light in the second wavelength region.

4. The light source device according to claim 1, wherein the first polarization separation element and the second polarization separation element each comprise a plate-type polarization beam splitter.

5. The light source device according to claim 1, wherein
the first polarization separation element and the second polarization separation element each comprise a prism-type polarization beam splitter,
the first polarization separation element is provided with a first polarization beam splitter film formed on a first surface of a first prism, and
the second polarization separation element is provided with a second polarization beam splitter film formed on a second surface of a second prism, the second surface forming substantially a right angle to the first surface.

6. The light source device according to claim 5, further comprising a third prism, wherein
the first prism, the second prism, and the third prism are configured to have substantially a cube shape and to be spaced apart from one another.

7. The light source device according to claim 5, further comprising a third prism, wherein
the first prism, the second prism, and the third prism are integrally formed to have substantially a cube shape, with an adhesive layer interposed thereamong.

8. The light source device according to claim 7, wherein
a third polarization beam splitter film having same property as the first polarization beam splitter film is further provided on a third surface, of the second prism, opposed to the first surface and on a fourth surface, of the third prism, opposed to the first surface, and
the adhesive layer is provided between the first polarization beam splitter film and the third polarization beam splitter film.

9. The light source device according to claim 1, further comprising a second light source section that emits light in a third wavelength region different from the light in the second wavelength region.

10. The light source device according to claim 4, wherein the second light source section includes multiple light sources that emit light beams in wavelength regions different from one another.

11. The light source device according to claim 1, wherein the first polarization separation element also serves as an optical path synthesizing element.

12. The light source device according to claim 9, wherein the light in the second wavelength region and the light in the third wavelength region are subjected to optical path synthesis by the first polarization separation element.

13. The light source device according to claim 1, further comprising a light-condensing optical system between the wavelength conversion section and the second polarization separation element.

14. The light source device according to claim 13, wherein the light-condensing optical system comprises a collimator lens.

15. The light source device according to claim 1, further comprising a polarization conversion element disposed between the wavelength conversion section and the second polarization separation element, the polarization conversion element changing polarization of the light in the second wavelength region reflected by the first polarization separation element.

16. The light source device according to claim 15, wherein the polarization conversion element comprises a depolarization element.

17. The light source device according to claim 15, wherein the polarization conversion element comprises a phase difference plate.

18. The light source device according to claim 1, wherein the wavelength conversion section includes a phosphor and a holding part that holds the phosphor.

19. The light source device according to claim 18, wherein the wavelength conversion section further includes a drive part that rotates the holding part.

20. A projection-type display apparatus comprising:
a light source device;
a light modulation element that modulates light emitted from the light source device; and
a projection optical system that projects light from the light modulation element,
the light source device including
a first light source section that emits light in a first wavelength region,
a wavelength conversion section disposed on an optical path of the light in the first wavelength region, the wavelength conversion section being excited by the light in the first wavelength region emitted from the first light source section to emit light in a second wavelength region different from the first wavelength region,
a first polarization separation element that separates the light in the second wavelength region emitted from the wavelength conversion section on a basis of polarization, and
a second polarization separation element disposed together with the first polarization separation element between the first light source section and the wavelength conversion section, the second polarization separation element having wavelength selectivity.
